# EUROPEAN PATENT APPLICATION

(11) **EP 4 629 748 A1**
(43) Date of publication of application: **08.10.2025**
(21) Application number: 23904033.0
(22) Date of filing: 14.12.2023
(51) Int. Cl.: H05B 6/06, H05B 6/12, H05B 1/02, H02M 7/219

(54) **INDUCTION HEATING DEVICE**

(30) Priority: 16.12.2022 JP 2022201361
(71) Applicant: Samsung Electronics Co., Ltd., Suwon-si, Gyeonggi-do 16677 (KR)
(72) Inventor: SODA, Yasushi, Yokohama-shi, Kanagawa 230-0027 (JP); NISHIKOORI, Nobuharu, Yokohama-shi, Kanagawa 230-0027 (JP); OOSAKO, Seisaku, Yokohama-shi, Kanagawa 230-0027 (JP)
(74) Representative: Walaski, Jan Filip
(86) International application number: PCT/KR2023/020671
(87) International publication number: WO 2024/128834

(57) **Abstract**

An induction heating device according to an embodiment of the present disclosure may include a plurality of heating coils that are two-dimensionally arranged on a top plate on which an object to be heated is placed, a plurality of first half-bridge circuits connected to first sides of the plurality of heating coils, and a plurality of second half-bridge circuits connected to second sides of the plurality of heating coils. The induction heating device may include a processor configured to operate at least some of the heating coils corresponding to where the object to be heated is placed, through a plurality of vessel detection sensors configured to detect the object to be heated placed on the top plate. The processor may perform control to switch between forward-phase driving and reverse-phase driving of at least some of the heating coils.

## Description

### Technical Field

The present disclosure relates to an induction heating device.

### Background Art

Induction heating devices are cooking appliances that utilize the principle of induction heating, and commonly referred to as induction devices, induction cookers, or induction heating cookers. Compared to gas ranges, induction heating devices do not consume oxygen and do not emit exhaust gas, thereby reducing indoor air pollution and a rise in indoor temperature. Furthermore, induction heating devices utilize an indirect method that induces heat in an object to be heated, and have high energy efficiency and stability, and because heat is generated in the object to be heated and the contact surface does not heat up, there is a low risk of burns, and thus, the demand for induction heating devices has continued to increase recently.

An induction heating device may include a plurality of heating zones. In this case, the induction heating device provides separate operation buttons for the respective heating zones, and a user may check the heating zone on which a vessel is placed and perform cooking by using the operation button for the heating zone.

In an induction heating device, a plurality of heating coils are arranged on a top plate, and when a pot is placed, its position is detected and the heating coil corresponding to the detected position is driven to perform heating of the pot.

Here, an inverter circuit that outputs high frequency is connected to each heating coil, and in a configuration where one inverter circuit is connected to one heating coil, the circuit scale is large, making it difficult to mount the circuits and increasing the cost.

Therefore, it is contemplated to switch a plurality of heating coils to be connected to one inverter circuit by a relay switch, so as to drive the plurality of heating coils connected to one inverter circuit together. For example, two half-bridges and one auxiliary half-bridge may be provided, and by switching them, four heating coils may be driven with two types of output levels.

However, in a case in which a large number of heating coils are arranged, there is an issue that the heating efficiency does not increase when adjacent heating coils have the same current direction (excitation direction).

### Disclosure of Invention

### SOLUTION TO PROBLEM

An induction heating device using half-bridge circuits according to an embodiment of the present disclosure may include a plurality of heating coils that are two-dimensionally arranged on a top plate on which an object to be heated is placed. In an embodiment, the induction heating device may include a plurality of first half-bridge circuits connected to first sides of the plurality of heating coils. In an embodiment, the induction heating device may include a plurality of second half-bridge circuits connected to second sides of the plurality of heating coils. In an embodiment, the induction heating device may include a plurality of vessel detection sensors configured to detect the object to be heated placed on the top plate. In an embodiment, the induction heating device may include a processor configured to operate at least some of the heating coils corresponding to a position where the object to be heated is placed. In an embodiment, the processor of the induction heating device may perform control to switch between forward-phase driving and reverse-phase driving of at least some of the heating coils. In an embodiment, among at least some of the heating coils of the induction heating device, the current directions of the heating coils adjacent to each other in the horizontal or vertical direction may be opposite to each other.

Provided is a method of driving a heating coil in an induction heating device according to an embodiment of the present disclosure. The method of driving a heating coil in an induction heating device according to an embodiment of the present disclosure may be performed by an induction heating device including a plurality of heating coils that are two-dimensionally arranged on a top plate on which an object to be heated is placed, a plurality of first half-bridge circuits connected to first sides of the plurality of heating coils, a plurality of second half-bridge circuits connected to second sides of the plurality of heating coils, a plurality of vessel detection sensors configured to detect the object to be heated placed on the top plate, and a processor configured to operate the plurality of heating coils. The method of driving a heating coil in an induction heating device according to an embodiment may include detecting, by the plurality of vessel detection sensors, the object to be heated placed on the top plate. The method of driving a heating coil in an induction heating device according to an embodiment may include operating, by the processor, at least some of the plurality of heating coils corresponding to a position where the object to be heated is placed. The method of driving a heating coil in an induction heating device according to an embodiment may include switching, by the processor, between forward-phase driving and reverse-phase driving of at least some of the heating coils that are operated from among the plurality of heating coils. In an embodiment, current directions of the heating coils adjacent to each other in the horizontal or vertical direction among at least some of the heating coils that are operated may be opposite to each other.

### Brief Description of Drawings

FIG. 1 is a diagram illustrating a configuration of an induction heating device according to an embodiment of the present disclosure.
FIG. 2 is a diagram illustrating an inverter circuit connected to a plurality of heating coils, according to an embodiment of the present disclosure.
FIG. 3 is a diagram illustrating current directions (excitation directions) when all eight heating coils are (a) driven in forward phase and (b) driven in reverse phase, according to an embodiment of the present disclosure.
FIG. 4 is a diagram illustrating an example of operating an induction heating device when one object to be heated is placed on a top plate of the induction heating device, according to an embodiment of the present disclosure.
FIG. 5 is a diagram illustrating an example of operating an induction heating device when a plurality of objects to be heated are placed on a top plate of the induction heating device, according to an embodiment of the present disclosure.
FIG. 6 illustrates an induction heating device including a plurality of second half-bridge circuits without a changeover switch, according to an embodiment of the present disclosure.
FIG. 7 illustrates an induction heating device including a plurality of second half-bridge circuits without a changeover switch, according to an embodiment of the present disclosure.
FIG. 8 illustrates an induction heating device including a plurality of first half-bridge circuits without a changeover switch, according to an embodiment of the present disclosure.
FIG. 9 illustrates an induction heating device including a plurality of second half-bridge circuits without a second relay switch, according to an embodiment of the present disclosure.
FIG. 10 illustrates an induction heating device including a plurality of half-bridge circuits without a changeover switch, according to an embodiment of the present disclosure.
FIG. 11 is a block diagram of an induction heating device according to an embodiment of the present disclosure.
FIG. 12 is a flowchart of a method of driving a heating coil in an induction heating device, according to an embodiment of the present disclosure.

### Mode for the Invention

Terms used herein will be briefly described, and then an embodiment of the present disclosure will be described in detail.

Although the terms used herein are selected from among common terms that are currently widely used in consideration of their functions in an embodiment of the present disclosure, the terms may be different according to an intention of one of ordinary skill in the art, a precedent, or the advent of new technology. Also, in particular cases, the terms are discretionally selected by the applicant of the present disclosure, in which case, the meaning of those terms will be described in detail in the corresponding description of an embodiment of the present disclosure. Therefore, the terms used herein are not merely designations of the terms, but the terms are defined based on the meaning of the terms and content throughout the present disclosure.

As used herein, the expression "at least one of a, b, and c" may indicate only a, only b, only c, both a and b, both a and c, both b and c, all of a, b, and c, or variations thereof.

Throughout the present disclosure, when a part "includes" an element, it is to be understood that the part may additionally include other elements rather than excluding other elements as long as there is no particular opposing recitation. In addition, as used herein, the terms such as "...er (or)", "... unit", "... module", etc., denote a unit that performs at least one function or operation, which may be implemented as hardware or software or a combination thereof.

Hereinafter, embodiments of the present disclosure will be described in detail with reference to the accompanying drawings to allow those of skill in the art to easily carry out the embodiments. An embodiment of the present disclosure may, however, be embodied in many different forms and should not be construed as being limited to the embodiment of the present disclosure set forth herein. In addition, parts in the drawings unrelated to the detailed description are omitted to ensure clarity of an embodiment of the present disclosure, and like reference numerals in the drawings denote like elements.

Hereinafter, an example of an induction heating device according to an embodiment of the present disclosure will be described with reference to the drawings.

The present disclosure has been made to solve the above-described problems, and an induction heating device that improves the heating efficiency of a pot, which is an object to be heated, is disclosed.

An induction heating device according to an embodiment of the present disclosure is a device for inductively heating an object to be heated that is placed on a top plate, such as a cooking pot. The induction heating device according to an embodiment of the present disclosure is an anyplace induction heating device configured such that an object to be heated may be freely placed and heated anywhere on the top plate. In the present disclosure, the induction heating device is not specifically referred to as an anyplace induction heating device, but simply as an induction heating device.

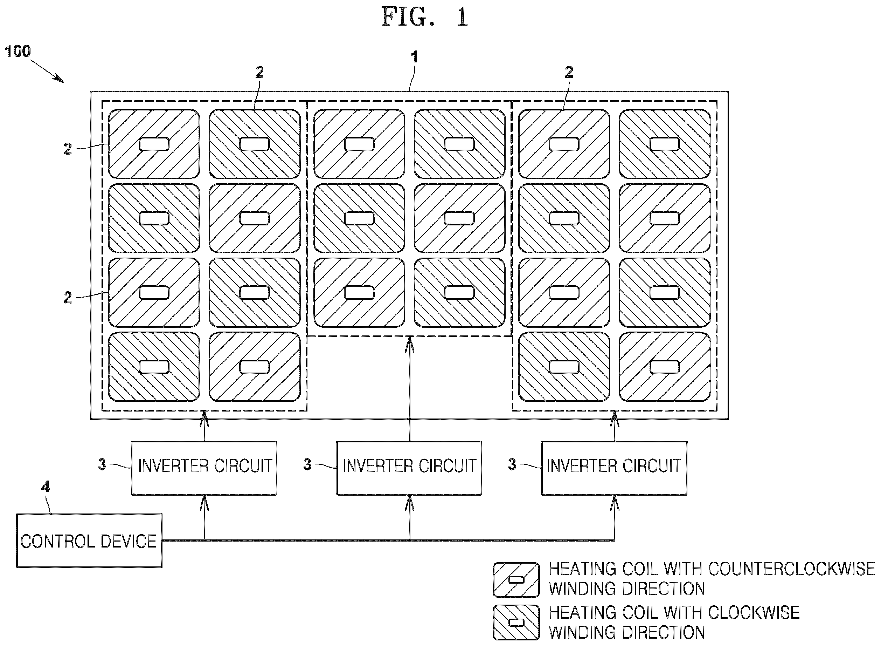

FIG. 1 is a diagram illustrating a configuration of an induction heating device according to an embodiment of the present disclosure.

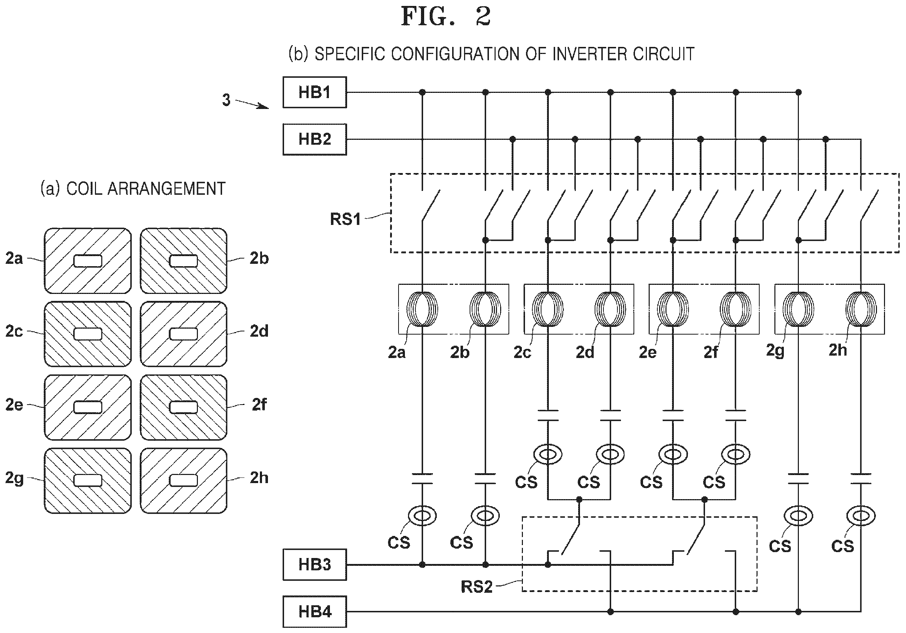

FIG. 2 is a diagram illustrating an inverter circuit connected to a plurality of heating coils, according to an embodiment of the present disclosure.

In detail, as illustrated in FIG. 1, an induction heating device 100 may include a top plate 1 on which an object to be heated is placed, a plurality of heating coils 2 for heating the object to be heated, inverter circuits 3 each configured to supply alternating current to at least some of the plurality of heating coils 2, and a control device 4 configured to control the inverter circuits 3. In addition, although not illustrated, the induction heating device 100 further includes a sensor coil for detecting the position of the object to be heated. In the present disclosure, the sensor coil for detecting the position of the object to be heated may also be referred to as a vessel detection sensor. The heating coil may be formed in a pattern on a printed circuit board (PCB), and a plurality of substrates on which heating coils are formed in a pattern may be stacked in a sheet form. The sensor coil, like the heating coils, may form a sheet shape installed on a PCB, and specifically, the sensor coil may be formed in a pattern on a PCB coated with a photoresist or the like. In an embodiment, a PCB sheet patterned with the sensor coil may be arranged in the uppermost layer when stacked with a PCB patterned with the plurality of heating coils.

The top plate 1 has, on the front side, a flat surface on which the object to be heated is placed, and is a flat plate made of an electrically insulating material such as glass or ceramic.

The heating coils 2 are arranged on the rear side of the top plate 1, and here, as illustrated in FIG. 1, the plurality of heating coils 2 may be arranged to form a two-dimensional array configuration (a vertical and horizontal matrix configuration) when viewed in a plan view.

In an embodiment, each heating coil 2 forms a sheet shape installed on a board, and specifically, the heating coil 2 may be formed in a pattern on a PCB coated with a photoresist or the like. In more detail, the heating coil 2 may be formed by winding a general copper coil, but may be formed in a pattern on a PCB, and the plurality of heating coils 2 may be formed in patterns in the respective layers where a plurality of PCBs are stacked. In the present disclosure, the plurality of heating coils 2 are illustrated to have the same shape and size, but their shapes and sizes may be changed appropriately. In addition, as described above, the heating coil 2 may be formed by winding a litz wire.

According to an embodiment of the present disclosure, as illustrated in FIGS. 1 and 2, the heating coils 2 adjacent to each other in the vertical or horizontal direction may be wound such that the winding directions are opposite to each other. FIG. 2 illustrates eight heating coils 2a to 2h wherein the heating coil 2a wound counterclockwise, the heating coil 2c wound clockwise, the heating coil 2e wound counterclockwise, and the heating coil 2g wound clockwise are arranged in the first row of these eight heating coils, from top to bottom, and the heating coil 2b wound clockwise, the heating coil 2d wound counterclockwise, the heating coil 2f wound clockwise, and the heating coil 2h wound counterclockwise are arranged in the second row, from top to bottom.

The inverter circuit 3 is a circuit configured to convert an alternating-current voltage supplied from a power source into an arbitrary driving frequency and outputs it to the heating coils 2. According to an embodiment of the present disclosure, as illustrated in FIG. 1, eight heating coils 2 on the left side may be supplied with high-frequency power from one inverter circuit 3, six heating coils 2 in the center may be supplied with high-frequency power from another inverter circuit 3, and eight heating coils 2 on the right side may be supplied with high-frequency power from another inverter circuit 3.

As illustrated in FIG. 2, the inverter circuit 3 according to an embodiment of the present disclosure has two first half-bridge circuits HB1 and HB2 connected to one end side of the plurality of heating coils 2, and two second half-bridge circuits HB3 and HB4 connected to another end side of the plurality of heating coils 2. Each of the half-bridge circuits HB1 to HB4 may include a switching element in each leg.

In addition, the inverter circuit 3 according to an embodiment of the present disclosure includes a first relay switch RS1 that switches a plurality of first half-bridge circuits HB1 and HB2 connected to each of the plurality of heating coils 2, and a second relay switch RS2 that switches a plurality of second half-bridge circuits HB3 and HB4 connected to each of the plurality of heating coils 2. Hereinafter, throughout the present disclosure, the plurality of first half-bridge circuits may be simply referred to as first half-bridge circuits, and the plurality of second half-bridge circuits may be simply referred to as second half-bridge circuits.

As illustrated in FIG. 2, when the eight heating coils 2 is denoted as heating coils 2a, 2b, ..., 2h, the first half-bridge circuit HB1 is connected to the heating coils 2a to 2g, and the first half-bridge circuit HB2 is connected to the heating coils 2b to 2h.

In addition, the first relay switch RS1 operates such that the heating coil 2a may be connected to the first half-bridge circuit HB1. In addition, the first relay switch RS1 operates such that each of the heating coils 2b to 2g may be connected to each of the two first half-bridge circuits HB1 and HB2. Furthermore, the first relay switch RS1 operates such that the heating coil 2h may be connected to the first half-bridge circuit HB2.

In addition, the second half-bridge circuit HB3 may be connected to the heating coils 2a to 2f, and the second half-bridge circuit HB4 may be connected to the heating coils 2c to 2h.

In addition, the second relay switch RS2 switches the two heating coils 2c and 2d to be connected to one of the two second half-bridge circuits HB3 and HB4. In addition, the second relay switch RS2 switches the two heating coils 2e and 2f to be connected to one of the two second half-bridge circuits HB3 and HB4.

The control device 4 may physically include a processor (or a central processing unit (CPU), a microprocessor unit (MPU), a microprocessor), a memory, an input interface, and the like. The control device 4 may functionally control each of the half-bridge circuits HB1 to HB4 and each of the relay switches RS1 and RS2 through the cooperation of the processor (or CPU, MPU, microprocessor) or its peripheral devices according to a program stored in the memory.

The control device 4 of the present embodiment is configured to selectively energize only the heating coil 2 located below or near the object to be heated placed on the top plate 1. In addition, the position of the object to be heated placed on the top plate is detected by a position sensor installed on the rear side of the top plate 1, for example, by an inductive proximity coil. In addition, the control device 4 controls the power supplied to each heating coil 2 based on values obtained through detection by current sensors CS (see FIG. 2) installed in the inverter circuit 3 to face the respective heating coils 2.

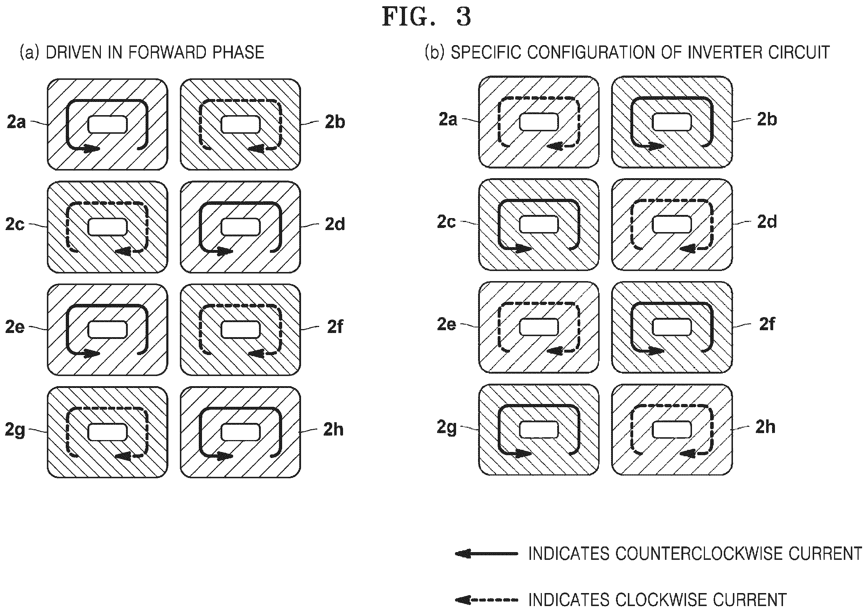

In detail, the control device 4 controls each of the half-bridge circuits HB1 to HB4 and each of the relay switches RS1 and RS2 according to the position of the object to be heated placed on the top plate, to switch between forward-phase driving and reverse-phase driving of each of the plurality of heating coils 2. In addition, FIG. 3 illustrates the current directions (excitation directions) when all eight heating coils 2a to 2h are driven in forward phase, and the current directions (excitation directions) when all eight heating coils 2a to 2h are driven in reverse phase.

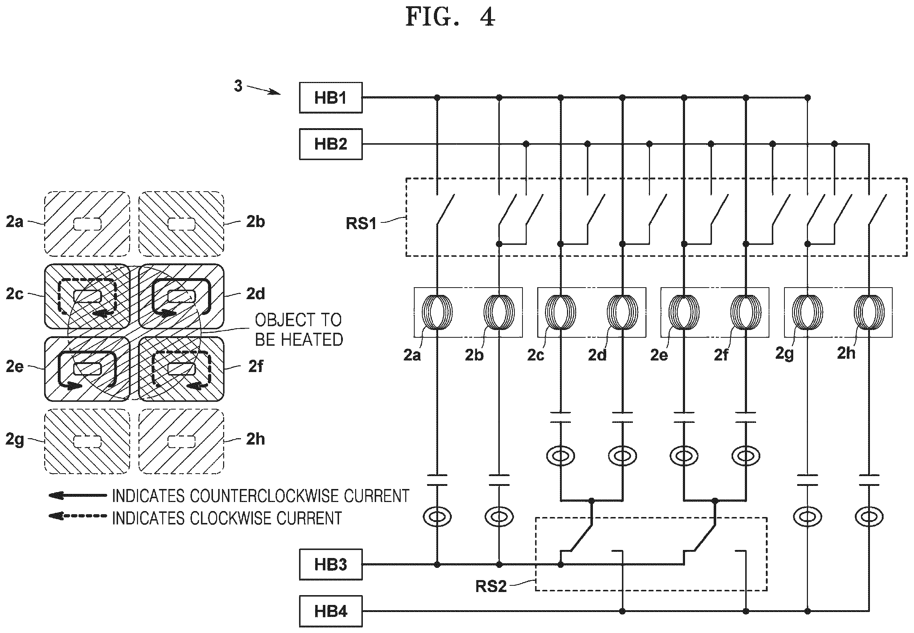

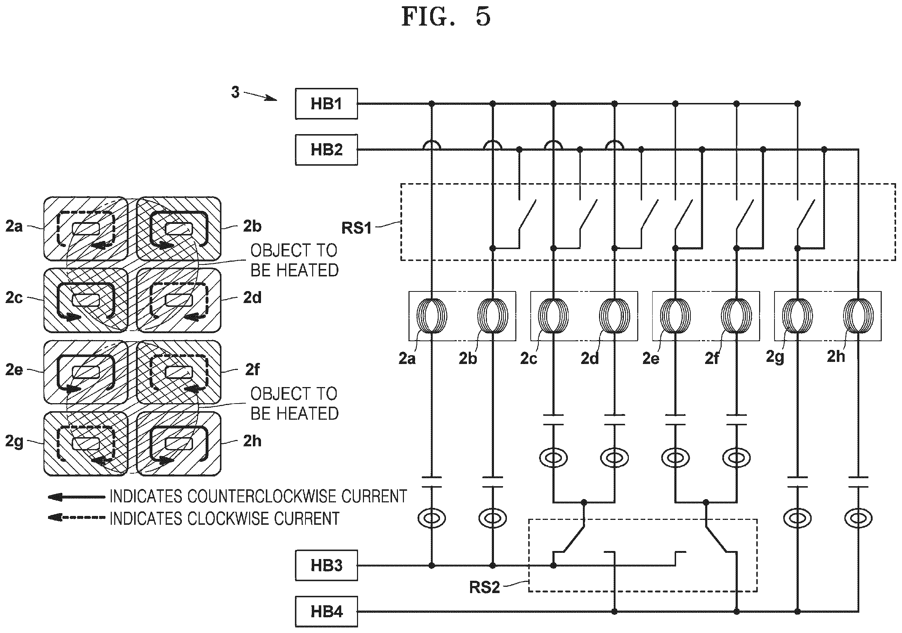

Specific examples are illustrated in FIGS. 4 and 5.

FIG. 4 is a diagram illustrating an example of operating an induction heating device when one object to be heated is placed on a top plate of the induction heating device, according to an embodiment of the present disclosure.

FIG. 4 illustrates an example in which one object to be heated is placed on the heating coils 2c to 2f. In this case, the control device 4 may control to energize only these four heating coils 2c to 2f.

In detail, the control device 4 connects the four heating coils 2c to 2f to the first half-bridge circuit HB1 by using the first relay switch RS1. In addition, the control device 4 connects the four heating coils 2c to 2f to the second half-bridge circuit HB3 by using the second relay switch RS2.

In addition, the control device 4 synchronously controls the first half-bridge circuit HB1 and the second half-bridge circuit HB3, so as to drive the four heating coils 2c to 2f in forward phase. Here, because the winding directions of adjacent heating coils among the four heating coils 2c to 2f are opposite to each other, the current directions (excitation directions) of the heating coils 2c and 2f are identical to each other (the clockwise direction), and the current directions (excitation directions) of the heating coils 2d and 2e are identical to each other (the counterclockwise direction). That is, the current directions (excitation directions) of adjacent heating coils among the four heating coils 2c to 2f are opposite to each other. In other words, among the operating heating coils, the heating coils adjacent in the horizontal or vertical direction have opposite current directions.

FIG. 5 is a diagram illustrating an example of operating an induction heating device when a plurality of objects to be heated are placed on a top plate of the induction heating device, according to an embodiment of the present disclosure.

FIG. 5 illustrates an example in which one object to be heated is placed on the heating coils 2a to 2d and another object to be heated is placed on the heating coils 2e to 2h. In this case, the control device 4 energizes four heating coils 2a to 2d and four heating coils 2e to 2h.

In detail, the control device 4 connects the four heating coils 2a to 2d to the first half-bridge circuit HB1 by using the first relay switch RS1. In addition, the control device 4 connects the four heating coils 2e to 2h to the first half-bridge circuit HB2 by using the first relay switch RS1. Furthermore, the control device 4 connects the four heating coils 2a to 2d to the second half-bridge circuit HB3 by using the second relay switch RS2. In addition, the control device 4 connects the four heating coils 2e to 2h to the second half-bridge circuit HB4 by using the second relay switch RS2.

In addition, the control device 4 synchronously controls the first half-bridge circuit HB1 and the second half-bridge circuit HB3, so as to drive the four heating coils 2a to 2d in reverse phase. Here, because the winding directions of adjacent heating coils among the four heating coils 2a to 2d are opposite to each other, when they are driven in reverse phase, the current directions (excitation directions) of the heating coils 2a and 2d are identical to each other(the clockwise direction), and the current directions (excitation directions) of the heating coils 2b and 2c are identical to each other (the counterclockwise direction). That is, the current directions (excitation directions) of adjacent heating coils among the four heating coils 2a to 2d that heat one object to be heated are opposite to each other.

In addition, the control device 4 synchronously controls the first half-bridge circuit HB2 and the second half-bridge circuit HB4, so as to drive the four heating coils 2e to 2h in forward phase. Here, because the winding directions of adjacent heating coils among the four heating coils 2e to 2h are opposite to each other, when they are driven in forward phase, the current directions (excitation directions) of the heating coils 2e and 2h are identical to each other(the counterclockwise direction), and the current directions (excitation directions) of the heating coils 2f and 2g are identical to each other (the clockwise direction). That is, the current directions (excitation directions) of adjacent heating coils among the four heating coils 2e to 2h that heat one object to be heated are opposite to each other. Here, the two heating coils 2c and 2d that heat one object to be heated, and the heating coils 2e and 2f that heat another object to be heated and are adjacent to the two heating coils 2c and 2d may have the same current direction (excitation direction). In an embodiment, the driving of each half-bridge circuit may be controlled such that the heating coils 2b, 2c, 2f, and 2g have the same current direction (the clockwise direction), the heating coils 2a, 2d, 2e, and 2h have the same current direction (the counterclockwise direction), and thus, two adjacent heating coils 2c and 2e, and two adjacent heating coils 2d and 2f that heat different objects to be heated have different current directions.

According to the induction heating device 100 configured as described above, each of the half-bridge circuits HB1 to HB4 and each of the relay switches RS1 and RS2 may be controlled to switch between forward-phase driving and reverse-phase driving of each of the plurality of heating coils 2, and thus, the heating efficiency of a pot, which is an object to be heated, may be improved.

For example, when heating the same pot, the heating efficiency of the pot may be improved by causing the current directions (excitation directions) of adjacent heating coils 2 to be opposite to each other. In addition, spurious radiation may be reduced.

In addition, when heating separate pots adjacent to each other, adjacent heating coils 2 that heat the separate pots (a heating coil that heats one pot and an adjacent heating coil that heats another pot) may be controlled to have the same current direction (excitation direction), such that the heating efficiency of each pot is improved and the influence between the pots is reduced.

In an embodiment, the first relay switch RS1 and the second relay switch RS2 may be replaced with electronic switches as well as relays. The electronic switch may be implemented as, for example, any one of a transistor, an insulated-gate bipolar transistor (IGBT), a field-effect transistor (FET), and a metal-oxide-semiconductor field-effect transistor (MOSFET).

Although two first half-bridge circuits and two second half-bridge circuits are provided in the embodiments according to FIGS. 4 and 5, in an embodiment, three or more first half-bridge circuits and three or more second half-bridge circuits may be provided.

In addition, although the second relay switch RS2 is provided in the embodiments according to FIGS. 4 and 5, a configuration is also possible in which the second relay switch RS2 is not provided and a plurality of second half-bridge circuits are connected to predetermined heating coils. In this case, the heating coil to which each second half-bridge circuit is connected may be set based on a predetermined heating pattern (a combination of heating coils to be energized).

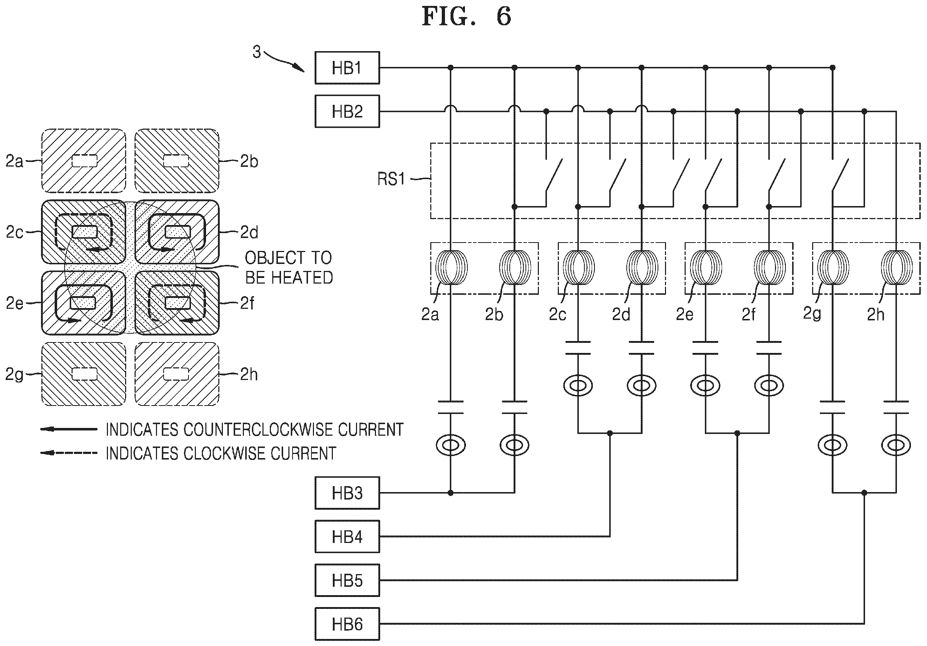

FIG. 6 illustrates an induction heating device including a plurality of second half-bridge circuits without a changeover switch, according to an embodiment of the present disclosure.

Referring to FIG. 6, the inverter circuit 3 of the induction heating device according to an embodiment of the present disclosure uses four second half-bridge circuits instead of using the second relay switch RS2 for switching between the second half-bridge circuits. For example, when an object to be heated is placed over four heating coils 2c, 2d, 2e, and 2f, the control device 4 may operate such that only HB1 from among the second half-bridge circuits operates and only HB4 and HB5 from among the second half-bridge circuits operate, by the first relay switch RS1. In an embodiment, the operation of only HB4 and HB5 from among the second half-bridge circuits may be determined by the first relay switch RS1, but the control device 4 may determine, through the vessel detection sensor, which heating coil the position of the object to be heated corresponds to from among the heating coils, so as to determine which of the second half-bridge circuits to operate. In an embodiment, in order for the control device 4 to operate such that only HB4 and HB5 from among the second half-bridge circuits operate, the inverter circuit 3 may confirm that the object to be heated is placed on the four heating coils 2c, 2d, 2e, and 2f, through the vessel detection sensor.

In FIG. 6, the current directions (excitation directions) of adjacent heating coils among the operating heating coils 2c to 2f may be opposite to each other.

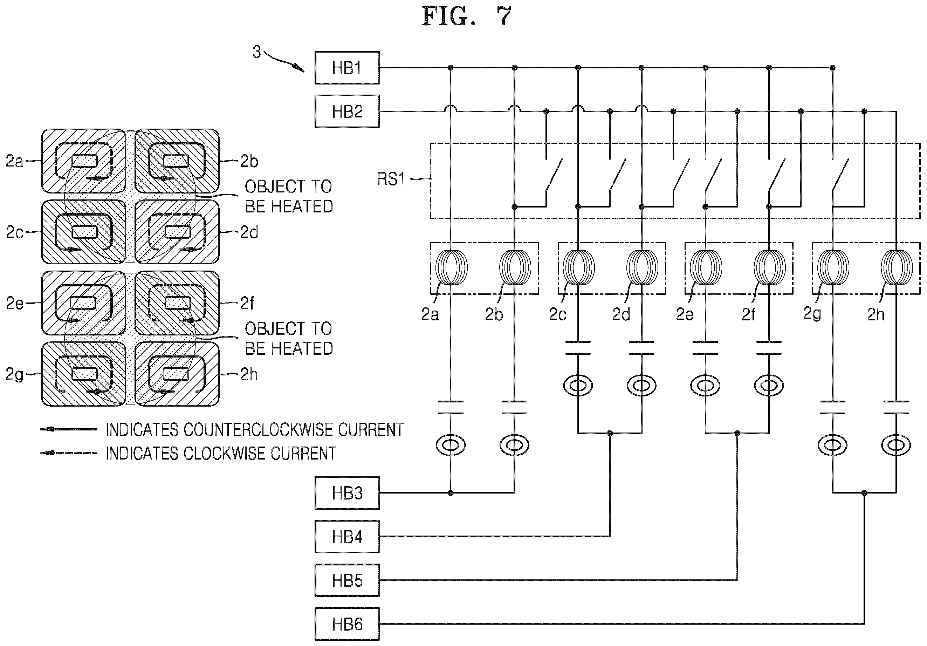

FIG. 7 illustrates an induction heating device including a plurality of second half-bridge circuits without a changeover switch, according to an embodiment of the present disclosure.

Referring to FIG. 7, the inverter circuit 3 of the induction heating device according to an embodiment of the present disclosure uses four second half-bridge circuits instead of using the second relay switch RS2 for switching the connection between the second half-bridge circuits. For example, when an object to be heated is placed over eight heating coils 2a to 2h, the first relay switch RS1 may cause HB1 from among the first half-bridge circuits to energize the heating coils 2a to 2d, and cause HB2 to energize the heating coils 2e to 2h. In an embodiment, among the second half-bridge circuits, HB3 operates to energize the heating coils 2a to 2b, HB4 operates to energize the heating coils 2c to 2d, HB5 operates to energize the heating coils 2e to 2f, and HB6 operates to energize the heating coils 2g to 2h. In an embodiment, the operation of HB3 to HB6 from among the second half-bridge circuits may be determined by the first relay switch RS1, but the control device 4 may determine, through the vessel detection sensor, which heating coil the position of the object to be heated corresponds to from among the heating coils, so as to determine which of the second half-bridge circuits to operate. In an embodiment, the vessel detection sensor may confirm that the object to be heated is placed on the eight heating coils 2a to 2h, and accordingly, the control device 4 may perform control to drive all of the second half-bridge circuits HB3 to HB6.

In FIG. 7, the current directions (excitation directions) of adjacent heating coils among the operating heating coils 2a to 2h may be opposite to each other.

Furthermore, the switching patterns of the first relay switch RS1 and the second relay switch RS2 are not limited to the above embodiments, and various patterns may be applied.

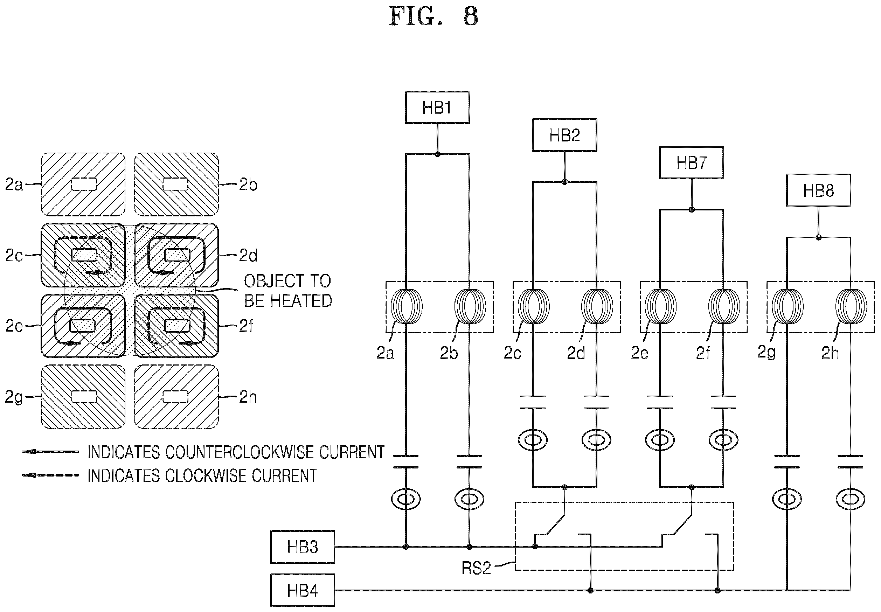

FIG. 8 illustrates an induction heating device including first half-bridge circuits without using a switch, according to an embodiment of the present disclosure.

Referring to FIG. 8, the inverter circuit 3 of the induction heating device according to an embodiment of the present disclosure uses four first half-bridge circuits HB1, HB2, HB7, and HB8 instead of using the first relay switch RS1 for switching the connection between the first half-bridge circuits. The second half-bridge circuits HB3 and HB4 may be switched by the second relay switch RS2.

For example, when an object to be heated is placed on four heating coils 2c to 2f, the vessel detection sensor detects that the object to be heated is placed on the four heating coils 2c to 2f, and based on the detection, the control device 4 drives HB2 and HB7 from among the first half-bridge circuits. The control device 4 drives only HB3 from among the second half-bridge circuits.

In FIG. 8, the current directions (excitation directions) of adjacent heating coils among the operating heating coils 2c to 2f may be opposite to each other.

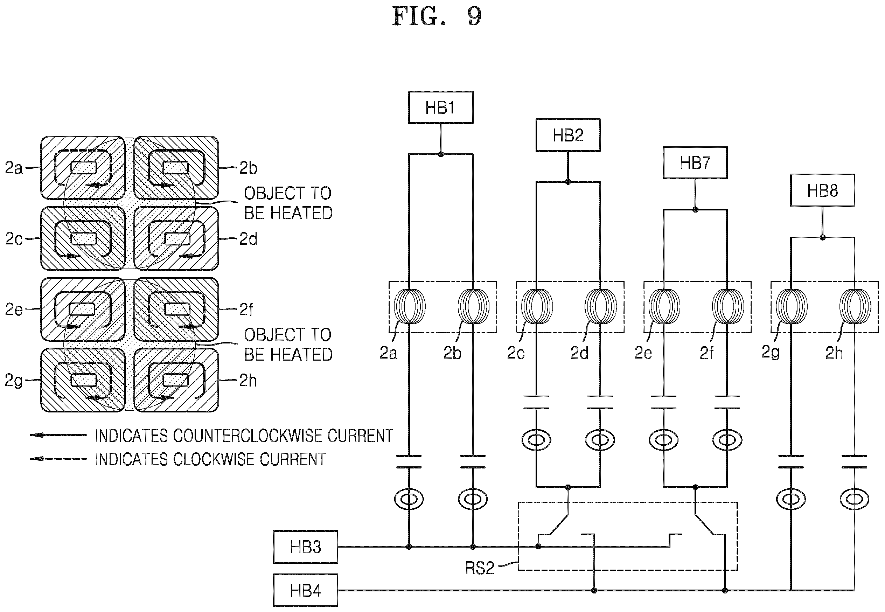

FIG. 9 illustrates an induction heating device including a plurality of second half-bridge circuits without a changeover switch, according to an embodiment of the present disclosure.

Referring to FIG. 9, the inverter circuit 3 of the induction heating device according to an embodiment of the present disclosure uses four first half-bridge circuits HB1, HB2, HB7, and HB8 instead of using the first relay switch RS1 for switching the connection between the first half-bridge circuits. For example, when an object to be heated is placed over eight heating coils 2a to 2h, the second relay switch RS2 may cause HB3 from among the second half-bridge circuits to energize the heating coils 2a to 2d, and cause HB4 to energize the heating coils 2e to 2h. In an embodiment, the control device 4 may operate such that, among the first half-bridge circuits, HB1 operates to energize the heating coils 2a to 2b, HB2 operates to energize the heating coils 2c to 2d, HB7 operates to energize the heating coils 2e to 2f, and HB8 operates to energize the heating coils 2g to 2h. In an embodiment, which of HB1, HB2, HB7, and HB8 from among the first half-bridge circuits is to operate may be determined by the control device 4 through the vessel detection sensor. In other words, the control device 4 may determine which heating coil the position of the object to be heated corresponds to from among the heating coils, so as to determine which of the first half-bridge circuits HB1, HB2, HB7, and HB8 to operate. In an embodiment, the vessel detection sensor may confirm that the object to be heated is placed on the eight heating coils 2a to 2h, and accordingly, the control device 4 may perform control to drive all of the first half-bridge circuits HB1, HB2, HB7, and HB8.

In FIG. 9, the current directions (excitation directions) of adjacent heating coils among the operating heating coils 2a to 2h may be opposite to each other.

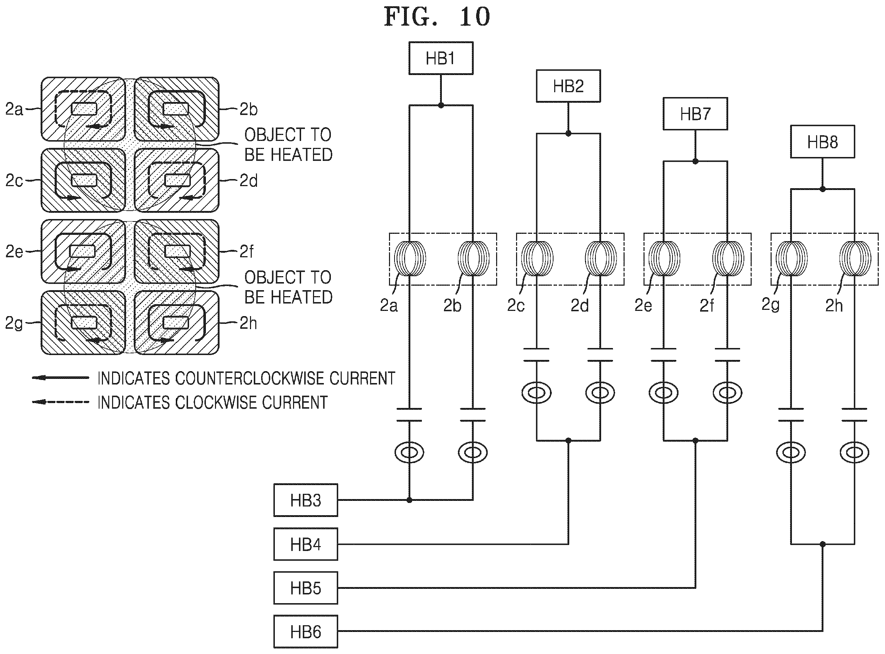

FIG. 10 illustrates an induction heating device including a plurality of half-bridge circuits without a changeover switch, according to an embodiment of the present disclosure.

Referring to FIG. 10, the inverter circuit 3 of the induction heating device according to an embodiment of the present disclosure uses four first half-bridge circuits HB1, HB2, HB7, and HB8 instead of using the first relay switch RS1 for switching the connection between the first half-bridge circuits. In addition, the inverter circuit 3 of the induction heating device according to an embodiment of the present disclosure uses four second half-bridge circuits HB3, HB4, HB5, and HB6 instead of using the second relay switch RS2 for switching the connection between the second half-bridge circuits.

In an embodiment, when an object to be heated is placed over four heating coils 2c to 2f, HB2 and HB7 from among the first half-bridge circuits operate, and HB4 and HB5 from among the second half-bridge circuits operate. The control device 4 may determine on which heating coils the object to be heated is placed by using the vessel detection sensor, so as to select which of the half-bridge circuits to operate.

In an embodiment, when an object to be heated is placed over eight heating coils 2a to 2h, all of the first half-bridge circuits HB1, HB2, HB7, and HB8 and all of the second half-bridge circuits HB3, HB4, HB5, and HB6 operate.

In FIG. 10, the current directions (excitation directions) of adjacent heating coils among the operating heating coils 2a to 2h may be opposite to each other.

In FIGS. 4 to 10, the current directions (excitation directions) of adjacent heating coils among the heating coils are opposite to each other because the winding directions of the adjacent heating coils are opposite to each other.

Alternatively, in FIGS. 4 to 10, the current directions (excitation directions) of adjacent heating coils among the heating coils are opposite to each other because the half-bridge circuits are controlled such that currents flow in opposite directions through the adjacent heating coils. Here, the adjacent heating coils may have the same winding direction. In this case, by using different half-bridge circuits respectively connected to the adjacent heating coils, the heating coil on one side is driven in forward phase, and the heating coil on another side is driven in reverse phase, such that the current directions (excitation directions) of the adjacent heating coils are opposite to each other.

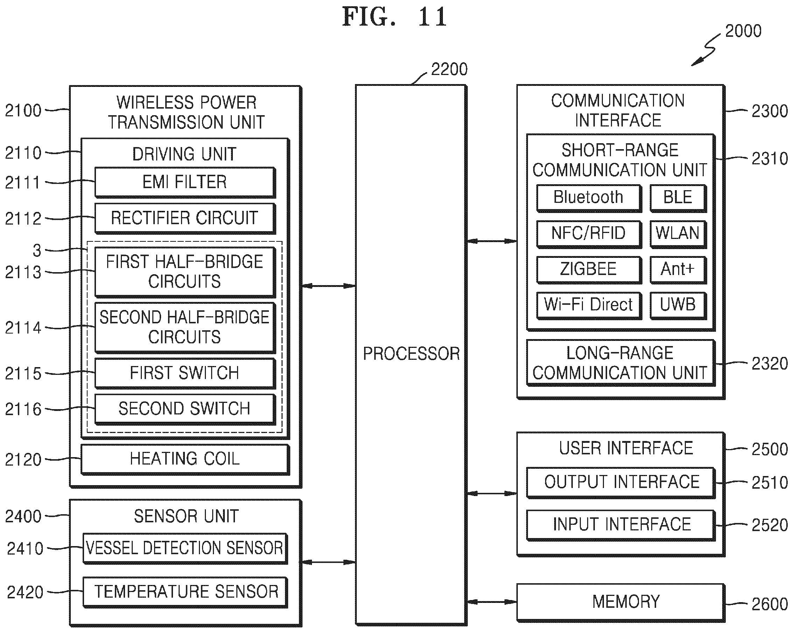

FIG. 11 is a block diagram of an induction heating device according to an embodiment of the present disclosure.

An induction heating device 2000 according to an embodiment of the present disclosure may include a wireless power transmission unit 2100, a processor 2200, a communication interface 2300, and a user interface 2500. However, all of the illustrated components are not essential components. The induction heating device 2000 may be implemented with more or fewer components than the illustrated components.

As illustrated in FIG. 11, the induction heating device 2000 according to an embodiment of the present disclosure may further include the wireless power transmission unit 2100, the processor 2200, the communication interface 2300, a sensor unit 2400, the user interface 2500, and a memory 2600.

Hereinafter, each of the components will be described.

The wireless power transmission unit 2100 may include a driving unit 2110 and a heating coil 2120, but is not limited thereto. The driving unit 2110 may receive power from an external power source and supply current to the heating coil 2120 according to a driving control signal of the processor 2200. The driving unit 2110 may include an electromagnetic interference (EMI) filter 2111, a rectifier circuit 2112, and the inverter circuit 3, and the inverter circuit 3 may include first half-bridge circuits 2113, second half-bridge circuits 2114, a first switch 2115, and a second switch 2116, but is not limited thereto. For example, the inverter circuit 3 may not include the first switch 2115 and the second switch circuit 2116. As illustrated in FIGS. 4 to 10, the number of first half-bridge circuits 2113 and the number of second half-bridge circuits 2114 may be different from each other.

In an embodiment, the first switch 2115 and the second switch 2116 may each be a relay switch or an electronic switch.

The EMI filter 2111 may block high-frequency noise included in alternating-current power supplied from the external power source and pass an alternating-current voltage and an alternating current of a preset frequency (e.g., 50 Hz or 60 Hz). A fuse and a relay for blocking an overcurrent may be provided between the EMI filter 2111 and the external power source. The alternating-current power from which high-frequency noise is filtered out by the EMI filter 2111 is supplied to the rectifier circuit 2112.

The rectifier circuit 2112 may convert the alternating-current voltage into a direct-current voltage. For example, the rectifier circuit 2112 may convert an alternating-current voltage that changes in magnitude and polarity (i.e., positive voltage or negative voltage) over time, into a direct-current voltage with a constant magnitude and polarity, and may convert an alternating current that changes in magnitude and direction (i.e., positive current or negative current) over time, into a direct current whose magnitude is constant. The rectifier circuit 2112 may include a bridge diode. For example, the rectifier circuit 2112 may include four diodes. The bridge diode may convert an alternating-current voltage that changes in polarity over time, into a positive voltage with a constant polarity, and may convert an alternating current that changes in direction over time, into a positive current with a constant direction. The rectifier circuit 2112 may include a direct-current (DC) link capacitor. The DC link capacitor may convert a positive voltage that changes in magnitude with time, into a DC voltage with a constant magnitude.

The inverter circuit 3 may include a switching circuit that supplies or blocks a driving current to the heating coil 2120, and a resonance circuit that generates resonance in association with the heating coil 2120. The switching circuit may include a half-bridge circuit, and each leg of the half-bridge circuit may include a first electronic switch and a second electronic switch. The first electronic switch and the second electronic switch may be connected in series between a positive line and a negative line both output from the rectifier circuit 2112. The first electronic switch and the second electronic switch may be turned on or off according to a driving control signal of the processor 2200 or a driving processor separately provided for driving the first electronic switch and the second electronic switch.

The inverter circuit 3 may control the current supplied to the heating coil 2120. For example, the magnitude and direction of the current flowing through the heating coil 2120 may change according to the on/off of the first electronic switch and the second electronic switch of each half-bridge circuit included in the inverter circuit 3. In this case, an alternating current may be supplied to the heating coil 2120. An alternating current is supplied to the heating coil 2120 according to switching operations of the first electronic switch and the second electronic switch. In addition, as the switching period of the first electronic switch and the second electronic switch increases (e.g., as the switching frequency of the first electronic switch and the second electronic switch decreases), the current supplied to the heating coil 2120 may increase, and the intensity of a magnetic field output by the heating coil 2120 (the output of the induction heating device 2000) may increase.

In a case in which the induction heating device 2000 includes a plurality of heating coils 2120, the processor 2200 may detect a vessel by using a vessel detection sensor 2410, determine which of the plurality of heating coils 2120 to operate, and select a half-bridge circuit in the inverter circuit 3 to operate. In an embodiment, at least one vessel detection sensor 2410 may be arranged for each of the plurality of heating coils 2120 to sense whether an object to be heated is placed on the heating coil.

The first switch 2115 may be turned on/off or switched by the processor 2200, and allows a half-bridge circuit to be driven from among the plurality of first half-bridge circuits 2113 to be connected to the heating coil 2120. Similarly, the second switch 2116 may also be turned on/off or switched by the processor 2200, and allows a half-bridge circuit to be driven from among the plurality of second half-bridge circuits 2114 to be connected to the heating coil 2120.

The heating coil 2120 may generate a magnetic field for heating a cooking vessel that is an object to be heated. For example, when a driving current is supplied to the heating coil 2120, a magnetic field may be induced around the heating coil 2120. When a current that changes in magnitude and direction over time, i.e., an alternating current, is supplied to the heating coil 2120, a magnetic field that changes in magnitude and direction over time may be induced around the heating coil 2120. The magnetic field around the heating coil 2120 may pass through the top plate made of tempered glass and reach an object to be heated placed on the top plate. The magnetic field that is generated by the heating coil 2120 and changes in magnitude and direction over time may cause eddy currents to flow in the object to be heated, thereby heating the object to be heated.

The processor 2200 controls the overall operation of the induction heating device 2000. The processor 2200 may be all or part of the control device 4 according to an embodiment of the present disclosure. The processor 2200 may execute programs stored in the memory 2600 to control the wireless power transmission unit 2100, the communication interface 2300, the sensor unit 2400, the user interface 2500, and the memory 2600.

The processor 2200 may include one processor or a plurality of processors. The processor 2200 according to an embodiment of the present disclosure may be a hardware processing circuit including at least one of a CPU, a graphics processing unit (GPU), an accelerated processing unit (APU), a many-integrated core (MIC), a digital signal processor (DSP), an integrated circuit, and a neural processing unit (NPU). The processor 2200 may be implemented in the form of an integrated system on a chip (SoC) including one or more electronic components. In a case in which the processor 2200 includes a plurality of processors, each processor may be implemented as separate hardware (H/W). The processor 2200 may be referred to as a microprocessor controller (MICOM), a microprocessor unit (MPU), or a microcontroller unit (MCU). The processor 2200 according to the present disclosure is a hardware device that may be implemented as a single-core processor or a multi-core processor.

According to an embodiment of the present disclosure, the induction heating device 2000 may be equipped with an artificial intelligence (AI) processor. The Al processor may be manufactured in the form of a dedicated hardware chip for Al, or may be manufactured as part of an existing general-purpose processor (e.g., a CPU or an application processor) or a dedicated graphics processor (e.g., a GPU), and then mounted on the induction heating device 2000.

In an embodiment, the processor 2200 may determine on which heating coils among the plurality of heating coils 2120 an object to be heated is placed by using the vessel detection sensor 2410, so as to control the inverter circuits 3, i.e., which half-bridge circuit of the inverter circuits 3 to operate and/or which switch to switch.

The communication interface 2300 may include one or more components that enable communication between the induction heating device 2000 and an object to be heated or between the induction heating device 2000 and a server device. For example, the communication interface 2300 may include a short-range communication unit 2310 and a long-range communication unit 2320. The short-range wireless communication unit may include, but is not limited to, a Bluetooth communication unit, a Bluetooth Low Energy (BLE) communication unit, a near-field communication unit, a wireless local area network (WLAN) (e.g., Wi-Fi) communication unit, a Zigbee communication unit, an Infrared Data Association (IrDA) communication unit, a Wi-Fi Direct (WFD) communication unit, an ultra-wideband (UWB) communication unit, an Ant+ communication unit, and the like. The long-range communication unit 2320 may be used to communicate with a server device (not shown) when the object to be heated is remotely controlled by the server device in an Internet-of-Things (IoT) environment. The long-range communication unit 2320 may include the Internet, a computer network (e.g., a LAN or a WAN), and a mobile communication unit. The mobile communication unit transmits and receives radio signals to and from at least one of a base station, an external terminal, and a server, on a mobile communication network. Here, the radio signals may include a voice call signal, a video call signal, or various types of data according to text/multimedia message transmission and reception. The mobile communication unit may include, but is not limited to, a 3G module, a 4G module, an LTE module, a 5G module, a 6G module, a narrowband loT (NB-IoT) module, an LTE for Machines (LTE-M) module, and the like.

The sensor unit 2400 may include the vessel detection sensor 2410 and a temperature sensor 2420, but is not limited thereto. The sensor unit 2400 may not include the temperature sensor 2420 as necessary.

The vessel detection sensor 2410 may be a sensor that detects whether an object to be heated is placed on the top plate of the induction heating device 2000. In detail, in a case in which the induction heating device 2000 is an anyplace induction heating device, one vessel detection sensor 2410 may be provided for each heating coil so as to determine on which heating coil an object to be heated is placed. The vessel detection sensor 2410 may be implemented as a current sensor, but is not limited thereto. The vessel detection sensor 2410 may be implemented as at least one of a proximity sensor, a touch sensor, a weight sensor, a temperature sensor, an illuminance sensor, and a magnetic sensor.

The temperature sensor 2420 may detect the temperature of the bottom surface of an object to be heated placed on the top plate, or the temperature of the top plate of the induction heating device 2000. According to an embodiment of the present disclosure, the temperature sensor 2420 may include a thermistor whose electrical resistance value changes according to temperature. For example, the temperature sensor 2420 may be a negative-temperature-coefficient (NTC) temperature sensor, but is not limited thereto. The temperature sensor 2420 may also be a positive-temperature-coefficient (PTC) temperature sensor.

The user interface 2500 may include an output interface 2510 and an input interface 2520. The output interface 2510 is for outputting an audio signal or a video signal, and may include a display unit, an audio output unit, and the like.

In a case in which the display unit and a touch pad form a layered structure to be configured as a touch screen, the display unit may be used as an input interface in addition to an output interface. The display may include at least one of a liquid-crystal display, a thin-film-transistor liquid-crystal display, a light-emitting diode (LED) display, an organic LED display, a flexible display, a three-dimensional (3D) display, and an electrophoretic display. Depending on an implementation of the induction heating device 2000, the induction heating device 2000 may include two or more display units.

The audio output unit may output audio data received from the communication interface 2300 or stored in the memory 2600. In addition, the audio output unit may output an audio signal related to a function performed by the heating device 2000. For example, the audio output unit may output voice information stating "There is no object to be heated in the cooking area" to allow a user to easily recognize which cooking area is being empty-heated. The audio output unit may include a speaker, a buzzer, and the like.

According to an embodiment of the present disclosure, the output interface 2510 may display information about an object to be heated. For example, the output interface 2510 may output a graphical user interface (GUI) corresponding to identification information of the object to be heated. The output interface 2510 may output, based on the identification information, the identification information of the current object to be heated along with whether the object to be heated is being empty-heated, and may also output in which cooking area (heating coil) the object to be heated is located.

The input interface 2520 is for receiving an input from the user. The input interface 2520 may be, but is not limited to, at least one of a key pad, a tact switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad), a jog wheel, and a jog switch.

The input interface 2520 may include a speech recognition module. For example, the induction heating device 2000 may receive, through a microphone, a voice signal, which is an analog signal, and convert a speech part into a computer-readable text by using an automatic speech recognition (ASR) model. The induction heating device 2000 may interpret the text by using a natural language understanding (NLU) model to obtain an utterance intention of the user. Here, the ASR model or the NLU model may be an artificial intelligence model. The artificial intelligence model may be processed by an artificial intelligence-dedicated processor designed in a hardware structure specialized for processing an artificial intelligence model. The artificial intelligence model may be generated via a training process. Here, being generated via a training process may mean that predefined operation rules or artificial intelligence model set to perform desired characteristics (or purposes), is generated by training a basic artificial intelligence model by using a learning algorithm that utilizes a large amount of training data. The artificial intelligence model may include a plurality of neural network layers. Each of the neural network layers has a plurality of weight values, and performs a neural network arithmetic operation via an arithmetic operation between an arithmetic operation result of a previous layer and the plurality of weight values.

Linguistic understanding is a technology for recognizing and applying/processing human language/characters, and may include natural language processing, machine translation, dialogue system, question answering, speech recognition/synthesis, and the like.

The memory 2600 may store programs for the processor 2200 to perform processing and control, and may store input/output data (e.g., a plurality of power transmission patterns). The memory 2600 may also store an artificial intelligence model.

The memory 2600 may include at least one of a flash memory-type storage medium, a hard disk-type storage medium, a multimedia card micro-type storage medium, a card-type memory (e.g., SD or XD memory), random-access memory (RAM), static RAM (SRAM), read-only memory (ROM), electrically erasable programmable ROM (EEPROM), programmable ROM (PROM), magnetic memory, a magnetic disk, and an optical disc. In addition, the heating device 2000 may operate a web storage or a cloud server that performs a storage function on the Internet.

The processor 2200 and the memory 2600 may be implemented as separate hardware integrated circuits (ICs) or may be implemented in one integrated IC.

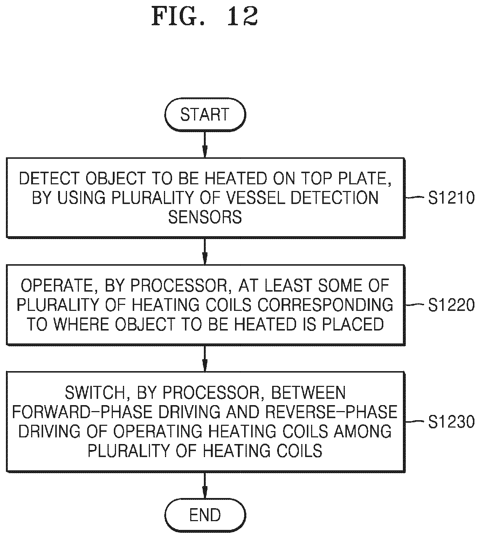

FIG. 12 is a flowchart of a method of driving a heating coil in an induction heating device, according to an embodiment of the present disclosure.

FIG. 12 is a flowchart of a method of driving a heating coil in the induction heating device 2000. In operation S1210, the induction heating device 2000 detects an object to be heated that is placed on the top plate, by using a plurality of vessel detection sensors. In an embodiment, at least one vessel detection sensor may be arranged in each of a plurality of heating coils, to determine whether an object to be heated is placed on each heating coil. In a case in which a plurality of heating coils are stacked, the stacked heating coils may be regarded as one unit, and at least one vessel detection sensor may be arranged for each unit.

In operation S1220, at least some of the plurality of heating coils corresponding to where the object to be heated is placed are operated by the processor. Thus, only the heating coils corresponding to where the object to be heated is located from among the plurality of heating coils operate. At this time, the current directions of heating coils adjacent to each other in the horizontal or vertical direction among the operating heating coils may be opposite to each other.

In operation S1230, the processor switches between forward-phase driving and reverse-phase driving of the operating heating coils among the plurality of heating coils.

In an embodiment, the induction heating device 2000 may further include a first switch that switches connections between a plurality of first half-bridge circuits connected to the plurality of heating coils, and/or a second switch that switches connections between a plurality of second half-bridge circuits connected to the plurality of heating coils.

The processor of the induction heating device 2000 controls the switching of the first switch and/or the switching of the second switch such that at least some of the heating coils corresponding to where the object to be heated is placed are operated, through the vessel detection sensors.

According to the present disclosure as described above, it is possible to switch between forward-phase driving and reverse-phase driving of each of a plurality of heating coils, and thus improve the heating efficiency of a pot, which is an object to be heated.

An induction heating device according to an embodiment of the present disclosure may include a plurality of heating coils that are two-dimensionally arranged in a top plate on which an object to be heated is placed. In an embodiment, the induction heating device may include one or more first half-bridge circuits connected to one end side of the plurality of heating coils. In an embodiment, the induction heating device may include one or more second half-bridge circuits connected to another end side of the plurality of heating coils. In an embodiment, the induction heating device may include a first relay switch that switches the first half-bridge circuits connected to each of the plurality of heating coils. In an embodiment, the induction heating device may include a control device configured to control each half-bridge circuit and the first relay switch to switch between forward-phase driving and reverse-phase driving of each of the plurality of heating coils.

The induction heating device according to an embodiment of the present disclosure may further include a second relay switch that switches the second half-bridge circuits connected to each of the plurality of heating coils. In an embodiment, the control device of the induction heating device may control each half-bridge circuit and each relay switch to switch between forward-phase driving and reverse-phase driving of each of the plurality of heating coils.

In the induction heating device according to an embodiment of the present disclosure, adjacent heating coils may be wound such that the winding directions are opposite to each other.

In the induction heating device according to an embodiment of the present disclosure, the control device may control each half-bridge circuit and each relay switch according to a position of the object to be heated placed on the top plate to switch between forward-phase driving and reverse-phase driving of each of the plurality of heating coils.

An induction heating device using half-bridge circuits according to an embodiment of the present disclosure may include a plurality of heating coils that are two-dimensionally arranged on a top plate on which an object to be heated is placed. In an embodiment, the induction heating device may include a plurality of first half-bridge circuits connected to first sides of the plurality of heating coils. In an embodiment, the induction heating device may include a plurality of second half-bridge circuits connected to second sides of the plurality of heating coils. In an embodiment, the induction heating device may include a plurality of vessel detection sensors configured to detect the object to be heated placed on the top plate. In an embodiment, the induction heating device may include a processor configured to operate at least some of the heating coils corresponding to a position where the object to be heated is placed. In an embodiment, the processor of the induction heating device may perform control to switch between forward-phase driving and reverse-phase driving of at least some of the heating coils. In an embodiment, among at least some of the heating coils of the induction heating device, the current directions of the heating coils adjacent to each other in the horizontal or vertical direction may be opposite to each other.

The induction heating device according to an embodiment of the present disclosure may include a first switch that switches connections between the plurality of first half-bridge circuits connected to each of the plurality of heating coils.

The processor of the induction heating device according to an embodiment may control switching of the first switch such that only at least some of the plurality of heating coils are operated.

The induction heating device according to an embodiment may include a second switch that switches connections between a plurality of second half-bridge circuits connected to each of the plurality of heating coils.

The processor of the induction heating device according to an embodiment may control switching of the second switch such that only at least some of the plurality of heating coils are operated.

In the induction heating device according to an embodiment, the first switch and the second switch may be relay switches or electronic switches.

In the induction heating device according to an embodiment, the heating coils adjacent to each other in the horizontal or vertical direction among the plurality of heating coils may have opposite winding directions.

The processor of the induction heating device according to an embodiment may control the first half-bridge circuit and the second half-bridge circuit according to the position of the object to be heated placed on the top plate to switch between forward-phase driving and reverse-phase driving of each of the plurality of heating coils.

The processor of the induction heating device according to an embodiment may switch between forward-phase driving and reverse-phase driving of each of the plurality of heating coils by controlling the first half-bridge circuits, the second half-bridge circuits, the first switch, and the second switch according to the position of the object to be heated placed on the top plate.

In the induction heating device according to an embodiment, at least one of the plurality of vessel detection sensors may be arranged in each of the plurality of heating coils.

The processor of the induction heating device according to an embodiment may drive, from among the plurality of vessel detection sensors, only the heating coil corresponding to the vessel detection sensor that has detected the object to be heated among the plurality of heating coils.

The plurality of heating coils of the induction heating device according to an embodiment may be formed in patterns on printed circuit boards, respectively.

In the induction heating device according to an embodiment, the printed circuit boards on which the plurality of heating coils are formed in the patterns may be stacked in a plurality of layers to form a sheet shape.

The plurality of vessel detection sensors of the induction heating device according to an embodiment may be formed in a pattern on a printed circuit board.

In the induction heating device according to an embodiment, the printed circuit board on which the plurality of vessel detection sensors are formed in the pattern may be stacked with the printed circuit boards on which the plurality of heating coils are formed in the patterns, and may be arranged in an uppermost layer.

A method of driving a heating coil in an induction heating device according to an embodiment of the present disclosure is provided, wherein the induction heating device may include a plurality of heating coils that are two-dimensionally arranged on a top plate on which an object to be heated is placed, and a plurality of first half-bridge circuits connected to first sides of the plurality of heating coils. In an embodiment, the induction heating device may include a plurality of second half-bridge circuits connected to second sides of the plurality of heating coils. In an embodiment, the induction heating device may include a plurality of vessel detection sensors configured to detect the object to be heated placed on the top plate of the induction heating device, and a processor configured to operate the plurality of heating coils.

The method of driving a heating coil in an induction heating device according to an embodiment of the present disclosure may include detecting, by the plurality of vessel detection sensors, the object to be heated placed on the top plate. The method of driving a heating coil in an induction heating device according to an embodiment may include operating, by the processor, at least some of the plurality of heating coils corresponding to a position where the object to be heated is placed. The method of driving a heating coil in an induction heating device according to an embodiment may include switching, by the processor, between forward-phase driving and reverse-phase driving of at least some of the heating coils that are operated from among the plurality of heating coils. In the method of driving a heating coil in an induction heating device according to an embodiment, current directions of the heating coils adjacent to each other in the horizontal or vertical direction among at least some of the heating coils that operated may be opposite to each other.

In the method of driving a heating coil in an induction heating device according to an embodiment, the induction heating device may include a first switch that switches connections between the plurality of first half-bridge circuits connected to the plurality of heating coils. The induction heating device may include a second switch that switches connections between the plurality of second half-bridge circuits connected to the plurality of heating coils. The method of driving a heating coil in an induction heating device according to an embodiment may include switching, by the processor, the first switch or the second switch such that at least some of the heating coils corresponding to the position the object to be heated is placed are operated, by using the vessel detection sensors.

In the method of driving a heating coil in an induction heating device according to an embodiment, the switching between the forward-phase driving and the reverse-phase driving of at least some of the heating coils may include controlling the first half-bridge circuit and the second half-bridge circuit according to the position of the object to be heated placed on the top plate to switch between the forward-phase driving and the reverse-phase driving of at least some of the heating coils.

In the method of driving a heating coil in an induction heating device according to an embodiment, at least one of the plurality of vessel detection sensors may be arranged in each of the plurality of heating coils.

In the method of driving a heating coil in an induction heating device according to an embodiment, the operating of at least some of the heating coils by the processor may include operating only the heating coil corresponding to the vessel detection sensor that has detected the object to be heated among at least one vessel detection sensor arranged in each of the plurality of heating coils.

In the method of driving a heating coil in an induction heating device according to an embodiment, the plurality of heating coils may be formed in patterns on printed circuit boards, respectively.

In the method of driving a heating coil in an induction heating device according to an embodiment, the printed circuit boards on which the plurality of heating coils are formed in patterns may be stacked in a plurality of layers to form a sheet shape.

A method according to an embodiment of the present disclosure may be embodied as program commands executable by various computer devices, and recorded on a computer-readable medium. The computer-readable medium may include program commands, data files, data structures, or the like separately or in combinations. The program commands to be recorded on the medium may be specially designed and configured for the present disclosure or may be well-known to and be usable by those skill in the art of computer software. Examples of the computer-readable recording medium include magnetic media such as hard disks, floppy disks, or magnetic tapes, optical media such as a compact disc ROM (CD-ROM) or a digital video disc (DVD), magneto-optical media such as a floptical disk, and hardware devices such as ROM, RAM, or flash memory, which are specially configured to store and execute program instructions. Examples of program instructions include not only machine code, such as code made by a compiler, but also high-level language code that is executable by a computer by using an interpreter or the like.

Some embodiments of the present disclosure may be implemented as a recording medium including computer-readable instructions such as a computer-executable program module. The computer-readable medium may be any available medium which is accessible by a computer, and may include a volatile or non-volatile medium and a removable or non-removable medium. Also, the computer-readable medium may include a computer storage medium and a communication medium. The computer storage media include both volatile and non-volatile, removable and non-removable media implemented in any method or technique for storing information such as computer-readable instructions, data structures, program modules or other data. The communication media typically include computer-readable instructions, data structures, program modules, other data of a modulated data signal, or other transmission mechanisms, and examples thereof include an arbitrary information transmission medium. Also, some embodiments of the present disclosure may be implemented as a computer program or a computer program product including computer-executable instructions such as a computer program executed by a computer.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. An induction heating device comprising:
a plurality of heating coils that are two-dimensionally arranged in a top plate on which an object to be heated is placed;
a plurality of first half-bridge circuits connected to first sides of the plurality of heating coils;
a plurality of second half-bridge circuits connected to second sides of the plurality of heating coils;
a plurality of vessel detection sensors configured to detect the object to be heated placed on the top plate; and
a processor configured to operate at least some of the plurality of heating coils corresponding to a position where the object to be heated is placed, by using the plurality of vessel detection sensors,
wherein the processor is further configured to perform control to switch between forward-phase driving and reverse-phase driving of the at least some of the heating coils that are operated from among the plurality of heating coils, and current directions of the heating coils adjacent to each other in a horizontal direction or a vertical direction among the at least some of the heating coils that are operated are opposite to each other.

2. The induction heating device of claim 1, further comprising a first switch
that switches connections between the plurality of first half-bridge circuits connected to each of the plurality of heating coils,
wherein the processor is further configured to control switching of the first switch such that only at least some of the plurality of heating coils are operated.

3. The induction heating device of claim 1 or 2, further comprising a second switch that switches connections between a plurality of second half-bridge circuits connected to each of the plurality of heating coils,
wherein the processor is further configured to control switching of the second switch such that only the at least some of the plurality of heating coils are operated.

4. The induction heating device of claim 2 or 3, wherein the first switch and the second switch are relay switches or electronic switches.

5. The induction heating device of any one of claims 1 to 4, wherein winding directions of heating coils adjacent to each other in the horizontal direction or the vertical direction among the plurality of heating coils are opposite to each other.

6. The induction heating device of any one of claims 1 to 4, wherein the processor is further configured to switch between forward-phase driving and reverse-phase driving of each of the plurality of heating coils, by controlling the first half-bridge circuits and the second half-bridge circuits according to a position of the object to be heated placed on the top plate.

7. The induction heating device of claim 6, wherein the processor is further configured to switch between the forward-phase driving and the reverse-phase driving of each of the plurality of heating coils, by controlling the first half-bridge circuits, the second half-bridge circuits, the first switch, and the second switch according to the position of the object to be heated placed on the top plate.

8. The induction heating device of any one of claims 1 to 7, wherein at least one of the plurality of vessel detection sensors is arranged in each of the plurality of heating coils.

9. The induction heating device of claim 8, wherein the processor is further configured to drive, from among the plurality of heating coils, only the heating coil corresponding to the vessel detection sensor among the plurality of vessel detection sensors that has detected the object to be heated.

10. The induction heating device of any one of claims 1 to 7, wherein the plurality of heating coils are formed in patterns on printed circuit boards, respectively.

11. The induction heating device of claim 10, wherein the printed circuit boards on which the plurality of heating coils are formed in the patterns are stacked in a plurality of layers to form a sheet shape.

12. The induction heating device of any one of claims 1 to 11, wherein the plurality of vessel detection sensors are formed in a pattern on a printed circuit board.

13. The induction heating device of claim 12, wherein the printed circuit board on which the plurality of vessel detection sensors are formed in the pattern is stacked with the printed circuit boards on which the plurality of heating coils are formed in the patterns, and is arranged in an uppermost layer.

14. A method of driving a heating coil in an induction heating device, the induction heating device comprising a plurality of heating coils that are two-dimensionally arranged on a top plate on which an object to be heated is placed, a plurality of first half-bridge circuits connected to first sides of the plurality of heating coils, a plurality of second half-bridge circuits connected to second sides of the plurality of heating coils, a plurality of vessel detection sensors configured to detect the object to be heated placed on the top plate, and a processor configured to operate the plurality of heating coils, the method comprising:
detecting, by the plurality of vessel detection sensors, the object to be heated placed on the top plate;
operating, by the processor, at least some of the plurality of heating coils corresponding to a position where the object to be heated is placed; and
switching, by the processor, between forward-phase driving and reverse-phase driving of the at least some of the heating coils that are operated from among the plurality of heating coils, wherein current directions of the heating coils adjacent to each other in a horizontal direction or a vertical direction among the at least some of the heating coils that are operated are opposite to each other.

15. The method of claim 14, wherein the induction heating device further comprises a first switch that switches connections between the plurality of first half-bridge circuits connected to the plurality of heating coils, or a second switch that switches connections between the plurality of second half-bridge circuits connected to the plurality of heating coils, and
the method further comprises switching, by the processor, the first switch or the second switch such that the at least some of the heating coils corresponding to the position where the object to be heated is placed are operated, by using the vessel detection sensors.
